# EUROPÄISCHE PATENTSCHRIFT

(11) **EP 1 965 657 B1**
(45) Veröffentlichungstag und Bekanntmachung des Hinweises auf die Patenterteilung: **16.04.2014**
(21) Anmeldenummer: 06828716.8
(22) Anmeldetag: 21.12.2006
(51) Int. Cl.: A23J 3/22, A23J 3/26

(54) **STRUKTURIERTES LEBENSMITTEL MIT EINER FLEISCHÄHNLICHEN STRUKTUR SOWIE VERFAHREN ZU DESSEN HERSTELLUNG**
STRUCTURED FOOD HAVING A MEAT-LIKE STRUCTURE AND METHOD FOR THE PRODUCTION THEREOF
ALIMENT TEXTURE PRESENTANT UNE TEXTURE DE TYPE VIANDE ET PROCEDE POUR LE PRODUIRE

(30) Priorität: 27.12.2005 DE 102005062822
(43) Veröffentlichungstag der Anmeldung: 10.09.2008
(73) Patentinhaber: P.F.C. Pro Food Company GmbH&Co.KG, 49638 Nortup (DE)
(72) Erfinder: REIMERDES, Ernst, Hartmut, CH-1096 Vilette (CH)
(74) Vertreter: Wulf, Rainer
(86) Internationale Anmeldenummer: PCT/DE2006/002288
(87) Internationale Veröffentlichungsnummer: WO 2007/073724

(56) Entgegenhaltungen:
- EP-A1- 1 520 485
- US-A- 3 645 747
- US-A- 4 209 534
- US-A1- 2003 003 194

## Beschreibung

Die Erfindung betrifft ein strukturiertes Lebensmittel mit einer Proteinmatrix und darin eingelagerten Nahrungsmittelbestandteilen.

Strukturierte Lebensmittel sind allgemein Produkte, deren Herstellung durch Formung von Frucht-, Gemüse-, Getreide-, Fleisch- oder Fischkonzentraten erfolgt. Unter strukturierten Proteinen werden fleischähnlich strukturierte Proteine verstanden. Fleischähnlich bedeutet dabei, dass die typische faserartige Textur und Konsistenz von Fleisch nachgealunt ist. Durch Zusatz von Gewürzen, Aroma- und Farbstoffen können strukturierte Proteine zudem in Aussehen und Geschmack dem natürlichen Vorbild angeglichen werden.

Aus der EP 0825817 sind proteinhaltige Lebensmittel, insbesondere strukturierte Pflanzen- und/oder Tierproteinprodukte bekannt, die ein ähnliches Gefühl im Mund aufweisen wie Fleisch. Die Produkte bestehen aus einer Matrix aus Fasern mit darin dispergierten Einschlusskörpern, wobei die Einschlusskörper in oder zwischen den Fasern eingelagert sind, um sie zu schwächen oder zu trennen, um so das Produkt zarter zu machen. Die Fasern können proteinhaltige Fasern umfassen, die einen Proteingehalt von mehr als 50 % aufweisen. Sie sind typischerweise durch Scherausrichtung von Fibrillen beim Extrudieren von Ausschlemmungen oder Teigen herstellbar. Das strukturierte Proteinprodukt kann auf jedem Protein oder jeder Mischung von Protein basieren, einschließlich tierischen Proteinen von Nebenprodukten der Fleisch- und Fischwirtschaft. Bevorzug sind jedoch pflanzliche Proteine. Der Nachteil der durch Extrudieren hergestellten Produkte besteht darin, dass die Struktur sehr kompakt ist. Weiterhin sind die Möglichkeiten der Formgebung eingeschränkt

Aus der US 3 645 747 A ist ein Verfahren zur Herstellung eines Fleischimitats bekannt, das aus Weizengluten besteht. Es kann weitere Proteine, auch Milchproteine, und andere Nahrungsmittelbestandteile enthalten. Das Produkt wird erhitzt, wodurch es expandiert und die Proteine koagulieren. Durch die Expansion werden Fasern und Membranen gebildet, wodurch es eine kompakte Struktur aufweist.

Aus der US 4 209 534 A ist ein Verfahren zur Herstellung eines thermostabilen texturierten Milchproteins bekannt, dem auch andere Nahrungsmittelbestandteile zugesetzt werden können. Das Lebensmittel weist eine faserförmige Struktur auf. Da es durch Extrudieren hergestellt wird, ist seine Struktur sehr kompakt.

In der US 2003/0003194 wird ein Lebensmittel beschrieben, das texturierte, faserförmige Milchproteine enthält. Andere Nahrungsmittelbestandteile können zugesetzt werden. Dieses Lebensmittel weist ebenfalls eine faserförmige Struktur auf. Da es durch Extrudieren hergestellt wird, ist seine Struktur sehr kompakt.

In der WO 01/97638 A1 wird ein stabiles Schaumprodukt beschrieben, das eine aufgeschäumte Nahrungsmittel-Feuchtmasse und wenigstens ein essbares, in Teilen oder vollständig denaturiertes Protein enthält. Letzteres dient der Stabilisierung des Schaums. Die Nahrungsmittel-Feuchtmasse enthält mehr als 20 % Wasser. Als Proteinquelle können Milchproteine, Eiklar sowie weitere native Proteine dienen. Zur Herstellung des stabilisierten Nahrungsmittel-Feuchtschaums wird ein Gemisch aus Protein und dem Nahrungsmittelgrundstoff zu einem Schaum aufgeschlagen, in einen Behälter gefüllt, der Behälter versiegelt und anschließend eine Denaturierung durch Erhitzung eingeleitet. Dieses Produkt ist zum Beispiel verwendbar für Babynahrungsmittel, Dessert, Eiscreme oder Mayonnaise. Als Fleischersatz kann es jedoch nicht dienen, da es den für Fleisch typischen Biss nicht aufweist.

Die EP 1 520 485 A offenbart ein strukturiertes Lebensmittel mit einer Proteinmatrix und darin eingelagerten Nahrungsmittelbestandteilen, bei dem die Proteinmatrix aus einer aufgeschäumten wässrigen Lösung aus Milchproteinen besteht, die durch denaturierte Proteine stabilisiert ist. Es kann auch Stabilisatoren zur Stabilisierung des Schaums enthalten. Dies führt dazu, dass die Schaumstruktur mit geschlossenen Glasbläschen mehrere Wochen stabil ist.

Aus der EP 1 520 484 A ist ein Verfahren zur Herstellung eines strukturierten Lebensmittels mit einer Proteinmatrix und darin eingelagerten Nahrungsmittelbestandteilen bekannt. Die Proteinmatrix besteht aus einer aufgeschäumten wässrigen Lösung aus Milchprotein, die durch Denaturierung stabilisiert ist. Der Schaum kann durch Stabilisatoren fixiert werden. Die Struktur des Schaums ist durch kleine Bläschen bestimmt.

Der Erfindung liegt die Aufgabe zugrunde, ein strukturiertes Lebensmittel auf Basis strukturierter Proteine bereitzustellen, das eine fleischähnliche Struktur aufweist, das bissfest ist mit einer Kaustruktur, die der des Fleisches entspricht, und auch in seinen sonstigen Eigenschaften denen des Fleisches entspricht.

Die Aufgabe wird durch ein strukturiertes Lebensmittel sowie ein Verfahren gelöst, das in den Patentansprüchen näher beschrieben wird.

Das erfindungsgemäße, strukturierte Lebensmittel besteht aus einer geschäumten Proteinlösung mit globulären Molkenproteinen und/oder micellarem Casein, die zusätzlich Eiklarpulver, Magermilchpulver, pflanzliche Öle, daraus hergestellt Emulsionen, strukturgebende pflanzliche Faserbestandteile, Gewürze, Aromen und Salz enthalten kann und durch Denaturierung der Proteine stabilisiert ist, deren durch Scherung zum Teil oder ganz geöffnete Gasblasen/Schaumstruktur weitere Nahrungsmittelbestandteile wie Magermilchpulver, Wasser und Stärke und/oder Mehl sowie gegebenenfalls weitere Zusätze wie Eiklarpulver, pflanzliche Öle, pflanzliche Fasern, Ballaststoffe, Gewürze, Salz und Aromastoffe enthalten.

Es hat sich in überraschender Weise gezeigt, dass das erfindungsgemäße strukturierte Lebensmittel in Textur und Konsistenz dem Fleisch entspricht, also als Fleischanalogon dienen kann. Es weist jedoch keine Faserstruktur auf, die Matrix besteht vielmehr aus einer Schaumstruktur. Das Lebensmittel lässt sich einfach weiterverarbeiten und ist durch Variation der optionalen Komponenten in Geschmack, Geruch und optischen Eigenschaften hochgradig variabel gestaltbar. Zur Aromatisierung des Lebensmittels genügen im Vergleich zu den mit einem intensiven Eigengeschmack behafteten Sojaprodukten geringe Mengen an Aromastoffen.

Das erfindungsgemäße Verfahren umfasst zunächst die Herstellung einer Molkenproteinlösung, die zusätzlich Eiklarpulver, Milchpulver, Stärke, Mehl, strukturbildende Fasern und Gewürze enthalten kann, danach wird diese Proteinlösung aufgeschäumt.
Vorzugsweise wird das Aufschäumen so durchgeführt, dass ein Volumenzuwachs im Verhältnis von 1:1,25 bis 1:5 bewirkt wird, bezogen auf das Volumen der eingesetzten Proteinlösung. Für das Aufschäumen werden die bekannten Verfahren eingesetzt. Anschließend wird das Protein denaturiert, wobei die Denaturierung nicht vollständig erfolgen muss. Auch hier werden die bekannten Verfahrensweisen eingesetzt. Vorzugsweise erfolgt das Denaturieren durch Temperaturerhöhung insbesondere durch Erhitzen des Schaums auf eine Temperatur im Bereich von 50 -120°C. Durch die thermische Behandlung kommt es zu einer zusätzlichen Stabilisierung des Schaums über eine Quervernetzung via Thiol-Disulfid-Austausch. Es hat sich gezeigt, dass mit dieser Maßnahme eine verfahrenstechnisch einfache und zuverlässige Denaturierung im erforderlichen Umfang sichergestellt ist.

Danach wird die Matrix durch Scherung zur Öffnung der Gasblasen/Schaumstruktur, z.B. mit einem Kneter aufgeschlossen und eine Kleberlösung, die Zutaten wie Magermilchpulver, Eiklarpulver, Fasern und gegebenenfalls Ballaststoffe, pflanzliche Öle und daraus hergestellt Emulsionen und Gewürze sowie Salz enthält, und eine wässrige Stärkelösung, die Stärke und/oder Mehl und gegebenenfalls Fasern, Gewürze und Ballaststoffe enthält, in diese aufgeschlossene Matrix mit den geöffneten Gasblasen/Schaumstruktur eingearbeitet.

Das erfindungsgemäße Verfahren zeichnet sich durch seine sichere industrielle Umsetzbarkeit und hinsichtlich der Betriebskosten wirtschaftliche Durchführbarkeit aus. Hohe Investitionskosten für die Anlagentechnik sowie die Durchführung des Verfahrens, wie etwa bei einem Spinnverfahren, können vermieden werden (minimal Processing). Die schonende Verfahrensführung verhindert weitgehend negative Einflüsse auf Geschmack, Geruch und Farbe des Produkts.
Das Verfahren erlaubt ferner die Verarbeitung/Herstellung von strukturierten Lebensmitteln mit einem hohen Anteil an Molkenproteinen, die in herkömmlichen

Extrusionsverfahren auf das konstante Laufverhalten des Extruders nachteilige Einflüsse nehmen.

Im Folgenden wird das erfindungsgemäße Verfahren erläutert.

Zunächst wird eine Lösung auf Basis von proteinhaltigen Molkenproteinfeststoffen hergestellt. Vorzugsweise enthält die Proteinlösung 5-25 Gewichtsteile gelöstes proteinhaltiges Molkenpulver, 0-20 Gewichtsteile gelöstes Magermilchpulver und 0-10 Gewichtsteile gelöstes Eiklarpulver. Durch die Zugabe von Magermilchpulver kann der Proteingehalt der aufschäumbaren Lösung erhöht werden, so dass ernährungsphysiologisch höherwertige Produkte erhältlich sind. Die Beimengung von Magermilchpulver ist auch in nachfolgenden Verfahrensschritten möglich. Durch die Beimengung von Eiklarpulver wird ebenfalls der ernährungsphysiologische Wert des Endproduktes erhöht. Zudem hat sich gezeigt, dass gerade das Aufschäumen der Proteinlösung durch die Zugabe von Eiklarpulver verbessert wird. Die Tendenz der im Eiklar vorhandenen Proteine, bereits beim Aufschäumen zu denaturieren, trägt überdies zur Stabilisierung des Schaums bei.
Die Lösung kann ferner strukturbildende Fasern, vorzugsweise Weizenfasern, sowie Aromen und Gewürze enthalten.

Nachfolgend wird die Proteinlösung aufgeschäumt. Vorzugsweise wird das Aufschäumen so durchgeführt, dass ein Volumenzusatz (Aufschlag) im Verhältnis von 1:1,25 bis 1:5 bewirkt wird, bezogen auf das Volumen der eingesetzten Proteinlösung. Ein derartiger Schaum hat eine für die weiteren Verfahrensschritte besonders geeignete Konsistenz und führt letztlich zu einem in Biss- und Kaustruktur und Textur dem natürlichen Produkt besonders gutem Fleischanalogen. Vorzugsweise wird zum Aufschäumen Luft in die Proteinlösung eingeleitet, beispielsweise mit Hilfe eines Gasdispergierers. Der Einsatz von (steriler) Luft hat gegenüber anderen Gasen vor allem den Vorteil geringerer Kosten und eines geringeren apparativen Aufwandes für den großtechnischen Einsatz.

Im folgenden Verfahrensschritt werden die Proteine des Schaums denaturiert. Dabei kommt es durch Aufspaltung nicht kovalenter Bindungen zu einer partiellen Entfaltung. Die Denaturierung des Schaums muss nicht vollständig erfolgen, sondern es genügt eine Denaturierung in dem Umfang, in dem der Schaum für die nachfolgenden Verfahrensschritte hinreichend stabilisiert wird. Vorzugsweise erfolgt das Denaturieren durch Temperaturerhöhung, insbesondere durch Erhitzen des Schaums auf eine Temperatur im Bereich von 50 bis 120° C. Die relativ niedrigen Temperaturen verhindern die Umsetzung der proteinhaltigen Bestandteile in ernährungsphysiologisch minderwertige Produkte (z.B. durch die Maillard-Reaktion).
Vorzugsweise erfolgt das Denaturieren durch Einleiten von heißem Wasserdampf in den Schaum. Dies erlaubt eine besonders gleichmäßige und verfahrenstechnisch einfache Denaturierung. Der Wasserdampf hat vorzugsweise eine Temperatur im Bereich von 50 bis 120° C und wird vorzugsweise mit einem Vordruck von 2 bis 10 bar in den Schaum eingeleitet.

Nach der Denaturierung wird eine für die Einbettung weiterer Nahrungsmittelbestandteile günstige Partikelgrößenverteilung des Schaums generiert. Diesbezüglich wird ein Zerkleinerungsgerät auf Basis des Rotor/Stator-Prinzips eingesetzt.

Anschließend wird der zerkleinerte Schaum mit weiteren Nahrungsmittelbestandteilen in einem Kneter vermengt. Verwendet wird eine gegebenenfalls verkleisterte Stärke- und/oder Mehllösung mit einem Gewichtsanteil 1 bis 20 % Stärke/Mehl. Die Verkleisterung erfolgt bei 60 bis 120 °C für eine Zeit von 1 bis 60 min. Die Stärkelösung kann als weitere Bestandteile 1 bis 15 % pflanzliche Fasern (vorgequollen mit bis zu 50% Gewichtsanteilen Wasser), vorzugsweise Weizenfasern, Gewürze, Aromen, Salz und Ballaststoffe beinhalten.
Nach einer Verarbeitungszeit von 2-60 min wird die wässrige Kleberlösung dem Kneter zugegeben, welche zwischen 2 bis 20 Gewichtsanteile Magermilchpulver und 1 bis 25 Gewichtsanteile Eiklarpulver aufweist. Die Lösung dient der Bindung und wird weiterhin genutzt, um bestimmte Rezepturkomponenten einzubringen. Durch die auftretende Schermg ist es möglich, die Nahrungsmittelbestandteile in die so aufgeschlossene Matrix mit den geöffneten Gasblasen des Schaums einzuarbeiten und über den Kleber zu fixieren. Die Kleberlösung kann als weitere Bestandteile Mehl und/oder Stärke, Gewürze, Aromen, Salz, Ballaststoffe und pflanzliche Öle aufweisen. Als pflanzliche Öle werden vorzugsweise solche verwendet, die einen hohen Gehalt an ungesättigten Fettsäuren enthalten. Das Pflanzenöl, welches mit 0 bis 20 Gewichtsanteilen zugesetzt wird, kann vor der Zugabe mit 1 bis 30 Gewichtsanteilen Wasser sowie 0,1 bis 10 Gewichtsanteilen Magermilchpulver emulgiert werden. Diesbezüglich werden die bekannten Dispergierter, beispielsweise auf Rotor/Stator-Basis, eingesetzt.

Vorzugsweise werden der Lösung als weitere Zusätze zugesetzt, 0 bis 6 Gewichtsteile Ballaststoffe sowie 0 bis 5 Gewichtsteile Salz, Gewürze und/oder Aromastoffe.

Dieser Lösung kann auch Zitronensäure zur Strukturverbesserung zugesetzt werden.

Es ist auch möglich, aus den Lösungen, die in den Schaum eingearbeitet werden, eine Lösung herzustellen, die alle Bestandteile enthält, die in den Schaum eingebracht werden sollen.

Als Stärke und Mehl, vorzugsweise Weizenstärke und Weizenmehl, können auch modifizierte Mehle und Stärken eingesetzt werden. Nach einer Verarbeitungszeit von 5 bis 60 min wird die Masse aus dem Kneter entfernt

Die Vermengung erfolgt vorteilhaft in einem doppelwandigen Kneter mit einer Manteltemperatur von 10 bis 50° C.

Als Produkt erhält man eine hoch viskose, teilweise stückige Masse, die der weiteren Verarbeitung wie Formen, Garen, Panieren, Frittieren, Kühlen und Verpacken zugefiihrt wird.

Die Erfindung wird an Hand eines Ausführungsbeispieles erläutert. Sie ist jedoch nicht auf dieses Beispiel beschränkt.

Der Prozess gliedert sich in 8 Verfahrenschritte, in denen die Rezepturkomponenten anteilig oder in der Gesamtheit verarbeitet werden.
Die im Weiteren genannten prozentualen Angaben zur Rezepturgestaltung beziehen sich jeweils auf die Gesamtcharge und nicht auf die jeweilige Vormischung.

### 1. Herstellung der Proteinlösung

Die Proteinlösung wird unter Einsatz eines Rührapparates mit schnell laufendem Rühraggregat angesetzt. Über einen Doppelmantel wird die Proteinlösung im Bereich T < 15 °C gekühlt. Das Wasser wird kalt als Vorlage (21,1 %) in den Behälter geleitet. Bei laufendem Rührorgan werden in der genannten Reihenfolge 7,6% Molkenproteinpulver, 4,0 % Eiklarpulver, 2,0 % Magermilchpulver, 0,3 % Würze, 0,3 % Salz und 0,1 % Zitronensäure Anhydrat Pulver zugegeben. Die Komponenten werden für t > 30 min gerührt, um eine homogene, klumpenfreie Lösung bereitzustellen.

### 2. Herstellung der Emulsion

Die Emulsion wird unter Einsatz eines Dispergierers hergestellt. In einer Vorlage von vorzugsweise 4 % Wasser mit einer Temperatur < 25 °C werden vorzugsweise 0,5-1% Magermilchpulver eingegeben und 5 min dispergiert. Im Anschluss erfolgt eine Zwischenlagerung von 30-120 min bei vorzugsweise 15°C. Anschließend werden 2% pflanzliches Öl zugegeben und für 15 min dispergiert.

### 3. Herstellen des Klebers

Der Kleber wird unter Einsatz eines Rührapparates mit schnell laufendem Rühraggregat angesetzt. Über einen Doppelmantel wird die Kleberlösung auf T < 15 °C gekühlt. Die Herstellung erfolgt zeitgleich zum Ansatz der Lösung nach 1. Das Wasser wird kalt als Vorlage (16,3 %) in den Behälter geleitet. Bei laufendem Rührorgan werden 5,9 % Eiklarpulver, 3,8 % Magermilchpulver, 1,8% Weizenmehl, 0,9 % Stärke und 0,6 % Gewürze und 0,6 %Salz zugegeben. Weiterhin wird die Emulsion, hergestellt nach 2, zugegeben. Die Mischung wird für t > 30 min gerührt, um eine homogene, klumpenfreie Lösung bereitzustellen.

### 4. Herstellung des Proteinschaums

Unter Einsatz einer Pumpe wird die Proteinlösung 1. einem Aufschlaggerät, einem Rotor/Stator-Dispergierer, zugeführt und aufgeschäumt. Als Gas wird Luft, welche über einen Sterilfilter geleitet wird, kontinuierlich zudosiert, so dass ein Aufschlag im Verhältnis 1:2,5 umgesetzt wird. Die zudosierte Luft wird feinst verteilt, es entsteht ein Proteinschaum mit sehr kleinen Gasblasen. Der Proteinschaum wird kontinuierlich hergestellt und in den Mischer nach 5. geleitet.

### 5. Denaturierung des Proteinschaums

Der nach 4, hergestellte Proteinschaum wird unter Einsatz eines Pflugscharmischers denaturiert. Weiterhin ist ein Agglomeratzerstörer in den Mischer integriert. Der Doppelmantel des Mischers wird auf 70 °C eingestellt.
Die aufgeschlagene Proteinlösung wird mit geringer Drehzahl verarbeitet. Die Denaturierung wird über eine Dampfinjektion unterstützt, wobei der Dampf über Düsen in den Behälterinnenraum geleitet wird. Bei druckloser Fahrweise des Behälters wird überschüssiger Nassdampf über einen Austrittsstutzen abgeführt.
Der Dampf wird mit einem Vorlagedruck von 5 bar über einen Dampferzeuger zur Verfügung gestellt. Vor der Dampfinjektion wird Kondensat, welches möglicherweise in den Leitungen verblieben ist, ausgeblasen. Die Denaturierung erfolgt mehrstufig in den Schritten: Mischen + Dampfinjektion, Mischen, (Gesamtzeit 4,5 min). Im Anschluss erfolgt eine Vorzerkleinerung unter Einsatz des Agglomeratzerstörers für weitere 0,5-5 min. Am Ende erfolgt die Entleerung des Mischers.
In den Angaben zu den Rezepturanteilen ist der bei der Denaturierung kondensierende Wasseranteil, der in der Masse verbleibt, berücksichtigt.

### 6. Zerkleinerung des Schaums

Der denaturierte Schaum nach 5. wird über ein Rotor/Stator-Schneidwerk zerkleinert. Es erfolgt eine einmalige Aufgabe auf das Schneidwerk

### 7. Herstellung der Mehl-Faserlösung

Im trockenen Zustand werden vorzugsweise 2,5 % Mehl und vorzugsweise 3,5 % Weizenfasern vorgemischt. Unter Einsatz des Kneters werden in diese Vormischung vorzugsweise 22 % Wasser mit einer Temperatur vorzugsweise > 90 °C eingegeben. Im Anschluss erfolgt ein Quellen / Verkleistern bei geringer Drehzahl der Knetorgane für vorzugsweise 20 min.

### 8. Endverarbeitung der Masse

Die Endverarbeitung der Masse erfolgt in einem doppelwandig ausgeführten Kneter. Der Apparat weist einen Doppel-U-Trog auf, die gegensinnig rotierenden Mischwerkzeuge arbeiten wandgängig und werden im niedrigen Drehzahlbereich gefahren, der Füllgrad wird auf ca. 0,5 eingestellt.
Als Vorlage befindet sich die Mehl-Faserlösung nach 7. in dem Kneter. Im weiteren wird der Schaum nach 5. und 6. zugegeben. Im Anschluss erfolgt ein Mischen/Kneten der Komponenten für vorzugsweise 5 min im Gegenlauf. Im weiteren werden die Kleberlösung nach 3. sowie vorzugsweise 1,4 Inulin und vorzugsweise ca. 0,6 % Gewürze zugegeben. Die anschließende Knet/Mischzeit beträgt vorzugsweise 1-20 min. Als Produkt liegt eine hochviskose, teilweise stückige Masse vor, die der weiteren Verarbeitung zugeführt wird.

### Rezepturbeispiel

- Wasser: 62%
- Molkenprotein: 7,6%
- Magermilchpulver: 6,4%
- Eiklarpulver: 9,9%
- Weizenstärke: 4,1%
- Weizenstärke: 0,9%
- Weizenfasern: 3,3%
- Olivenöl: 1,9%
- Inulin: 1,4%
- gekörnte Brühe: 0,9%
- Salz: 0,9%
- Gewürze: 0,6%
- Zironensäure: 0,1%

## Patentansprüche

1. Strukturiertes Lebensmittel mit einer Proteinmatrix und darin eingelagerten Nahrungsmittelbestandteilen, bei dem die Proteinmatrix aus einer aufgeschäumten wässrigen Lösung aus Milchproteinen besteht, die durch Denaturierung der Proteine stabilisiert ist, **dadurch gekennzeichnet, dass** die Milchproteine aus globulären Molkenproteinen und / oder micellären Caseinen bestehen, der Schaum geöffnete Gasblasen aufweist, die die Nahrungsmittelbestandteile enthalten, die durch einen Kleber fixiert sind.

2. Strukturiertes Lebensmittel nach Anspruch 1, **dadurch gekennzeichnet, dass** die Lösung Molkenprotein sowie Eiklarpulver und/oder Magermilchpulver enthält.

3. Strukturiertes Lebensmittel nach Anspruch 1 oder 2, **dadurch gekennzeichnet, dass** die Lösung andere globuläre bzw. offenkettige Proteine wie Sojaprotein bzw. Gelatine oder Gluten enthält.

4. Strukturiertes Lebensmittel nach einem der Ansprüche 1 bis 3, **dadurch gekennzeichnet, dass** die Lösung Ballaststoffe, z.B. pflanzliche Fasern, enthält.

5. Strukturiertes Lebensmittel nach Anspruch 4, **dadurch gekennzeichnet, dass** die Fasern aus Weizenfasern und/oder Chicoree bestehen.

6. Strukturiertes Lebensmittel nach einem der Ansprüche 1 bis 5, dass der Nahrungsmittelbestandteil aus Magermilchpulver besteht.

7. Strukturiertes Lebensmittel nach einem der Ansprüche 1 bis 6, **dadurch gekennzeichnet, dass** als weitere Nahrungsmittelbestandteile einzeln oder in Kombination Pflanzenöle, pflanzliche Fasern, lösliche und/oder unlösliche Ballaststoffe, Salz, Gewürze oder Aromastoffe in die Gasblasen/Schaumstruktur eingelagert sind.

8. Strukturiertes Lebensmittel nach einem der Ansprüche 1 bis 7, **dadurch gekennzeichnet, dass** als weitere Nahrungsmittelbestandteile emulgierte Pflanzenöle oder mit Milchproteinen gecoatete Pflanzenöle in die Gasblasen/Schaumstruktur eingelagert sind.

9. Strukturiertes Lebensmittel nach einem der Ansprüche 1 bis 8, **dadurch gekennzeichnet, dass** der Kleber aus einer wässrigen Lösung aus Stärke und/oder Mehl und/oder Eiklarpulver besteht.

10. Strukturiertes Lebensmittel nach Anspruch 9, **dadurch gekennzeichnet, dass** der Kleber zusätzlich Nahrungsmittelbestandteile wie Magermilchpulver, Gewürze, Aromen, Salz, Pflanzenöle, Mehl und/oder Stärke enthält.

11. Strukturiertes Lebensmittel nach einem der Ansprüche 1 bis 10, **dadurch gekennzeichnet, dass** als weitere Nahrungsmittelbestandteile vorgequollene pflanzliche Fasern und gegebenenfalls verkleisterte Stärke und/oder verkleistertes Mehl in die Gasblasen/Schaumstruktur eingelagert sind.

12. Verfahren zur Herstellung eines strukturierten Lebensmittels nach einem der Ansprüche 1 bis 11, bei dem die wässrige Lösung aus Milchproteinen aufgeschäumt wird und die Proteine denaturiert werden, **dadurch gekennzeichnet, dass** die Gasblasen des Schaums durch Scheren ganz oder teilweise geöffnet, die Nahrungsmittelbestandteile in die aufgeschlossenen Matrix und damit in die geöffneten Gasblasen/Schaumstruktur eingearbeitet und dort mittels eines Klebers fixiert werden.

13. Verfahren zur Herstellung eines strukturierten Lebensmittels nach Anspruch 12, **dadurch gekennzeichnet, dass** die aufgeschäumten, denaturierten Milchproteine über eine Zerkleinerung für die scherinduzierte Aufnahme weiterer Nahrungsmittelbestandteile vorbereitet werden.

14. Verfahren nach Anspruch 12, **dadurch gekennzeichnet, dass** das Aufschäumen einen Volumenzuwachs von 1:1,25 bis 1:5 bewirkt, bezogen auf das Volumen der eingesetzten Milcheiweißlösung.

## Claims

1. Structured food with a protein matrix and food components embedded therein, whereby the protein matrix consists of a foamed-up watery solution of milk proteins which is stabilised by denaturing the proteins, whereby the milk proteins consist of globular whey proteins and/or micellar caseins, the foam contains opened gas bubbles, which in turn contain food components fixed by a gluing agent.

2. Structured food according to claim 1, whereby the solution contains whey protein as well as albumen powder and/or skimmed milk powder.

3. Structured food according to claim 1 or 2, whereby the solution contains other globular and/or open-chain proteins such as soy protein and/or gelatine or gluten.

4. Structured food according to one of the claims 1 to 3 whereby the solution contains fibres, e.g. plant fibres.

5. Structured food according to claim 4 whereby the fibres consist of wheat fibres and/or chicory.

6. Structured food according to one of the claims 1 to 5 whereby the food components are made of skimmed-milk powder.

7. Structured food according to one of the claims 1 to 6 whereby all further food components have individual or combined vegetable oils, plant fibres, soluble and/or insoluble fibres, salt, spices or flavouring agents embedded in the gas bubbles/foam structure.

8. Structured food according to one of the claims 1 to 7 whereby emulsified vegetable oils or vegetable oils coated with milk proteins are embedded in the gas bubbles/foam structure as further food components.

9. Structured food according to one of the claims 1 to 8, whereby the gluing agent is made of a watery solution of starch and/or flour and/or albumen powder.

10. Structured food according to claim 9, whereby the gluing agent contains additional food components, such as skimmed-milk powder, spices, flavouring agents, salt, vegetable oils, flour and/or starch.

11. Structured food according to one of the claims 1 to 10, whereby pre-soaked plant fibres and, if applicable, agglutinated starch and/or agglutinated flour are embedded in the gas bubbles/foam structure as further food components.

12. Method for the production of structured food according to one of the claims 1 to 11, whereby the watery milk protein solution is foamed and the proteins are denaturised, whereby the gas bubbles of the foam are opened wholly or partially by means of shearing, the food components are worked into the open matrix and thus into the open gas bubbles/foam structure and are fixed there by means of a gluing agent.

13. Method for the production of a structured food according to claim 12, whereby the foamed, denaturised milk proteins are prepared for the shear-induced intake of further food components by means of comminution.

14. Method according to claim 12, whereby the foaming causes an increase in volume of 1:1.25 to 1:5 with respect to the volume of the milk protein solution used.

## Revendications

1. Aliment texturé avec une matrice protéique ainsi que les composants alimentaires qu'elle contient, pour lequel la matrice protéique se compose d'une mousse de solution aqueuse de protéines de lait, stabilisée grâce à la dénaturation des protéines, **caractérisé en ce que** les protéines de lait sont constituées de protéines globulaires de petit lait et/ou de caséines micellaires, la mousse comportant des bulles de gaz ouvertes qui contiennent les composants alimentaires fixés à l'aide d'un adhésif.

2. Aliment texturé selon la revendication 1, **caractérisé en ce que** la solution contient des protéines de petit lait ainsi que du blanc d'oeuf en poudre et/ou du lait écrémé en poudre.

3. Aliment texturé selon la revendication 1 ou 2, **caractérisé en ce que** la solution continent d'autres protéines globulaires ou à chaîne ouverte telles que des protéines de soja ou de la gélatine ou du gluten.

4. Aliment texturé selon une des revendications 1 à 3, **caractérisé en ce que** la solution contient des fibres alimentaires, par ex. des fibres végétales.

5. Aliment texturé selon la revendication 4, **caractérisé en ce que** les fibres sont constituées de fibres de blé et/ou de chicorée.

6. Aliment texturé selon une des revendications 1 à 5, **caractérisé en ce que** le composant alimentaire se compose de lait écrémé en poudre.

7. Aliment texturé selon une des revendications 1 à 6, **caractérisé en ce que** les bulles de gaz/la structure de mousse contient/contiennent également d'autres composants alimentaires, seuls ou combinés, à savoir des huiles végétales, des fibres végétales, des fibres alimentaires solubles et/ou insolubles, du sel, des épices ou des arômes.

8. Aliment texturé selon une des revendications 1 à 7, **caractérisé en ce que** les bulles de gaz/la structure de mousse contient/contiennent d'autres composants alimentaires, à savoir des huiles végétales émulsionnées ou des huiles végétales enrobées de protéines de lait.

9. Aliment texturé selon une des revendications 1 à 8, **caractérisé en ce que** l'adhésif se compose d'une solution aqueuse à base d'amidon et/ou de farine et/ou de blanc d'oeuf en poudre.

10. Aliment texturé selon la revendication 9, **caractérisé en ce que** l'adhésif contient également des composants alimentaires tels que du lait écrémé en poudre, des épices, des arômes, du sel, des huiles végétales, de la farine et/ou de l'amidon.

11. Aliment texturé selon une des revendications 1 à 10, **caractérisé en ce que** les bulles de gaz/la structure de mousse contient/contiennent d'autres composants, à savoir des fibres végétales trempées et éventuellement de l'amidon gélatinisé et/ou de la farine gélatinisée.

12. Méthode de production d'un aliment texturé selon une des revendications 1 à 11, qui implique de faire mousser la solution aqueuse de protéines de lait et de dénaturer les protéines, **caractérisée en ce que** les bulles de gaz de la mousse sont complètement ou partiellement ouvertes par cisaillement, que les composants alimentaires sont incorporés à la matrice ouverte et ainsi aux bulles de gaz ouvertes/à la structure de mousse ouverte et qu'ils y sont fixés à l'aide d'un adhésif.

13. Méthode de production d'un aliment texturé selon la revendication 12, **caractérisée en ce que** les protéines de lait moussées et dénaturées sont concassées pour l'assimilation par cisaillement d'autres composants alimentaires.

14. Méthode selon la revendication 12, **caractérisée en ce que** l'émulsion a pour effet une croissance du volume de 1:1,25 à 1:5, par référence au volume de la solution de protéines de lait utilisée.
